**Europäisches Patentamt**

**European Patent Office**

**Office européen des brevets**

(11) Veröffentlichungsnummer: **0 263 324 B1**

(12) # EUROPÄISCHE PATENTSCHRIFT

(45) Veröffentlichungstag der Patentschrift:
07.03.90

(51) Int. Cl.⁴: **F01N 3/28**

(21) Anmeldenummer: 87113356.7

(22) Anmeldetag: 12.09.87

(54) **Matrix für einen katalytischen Reaktor zur Abgasreinigung.**

(30) Priorität: 08.10.86 DE 3634235

(43) Veröffentlichungstag der Anmeldung:
13.04.88 Patentblatt 88/15

(45) Bekanntmachung des Hinweises auf die Patenterteilung:
07.03.90 Patentblatt 90/10

(84) Benannte Vertragsstaaten:
DE ES FR GB IT SE

(56) Entgegenhaltungen:
EP-A- 0 136 515
DE-A- 2 924 592
GB-A- 2 001 547
US-A- 1 486 977
US-A- 1 937 466

PATENT ABSTRACTS OF JAPAN, Band 8,
Nr. 216 (M-329) [1653], 3. Oktober 1984; &
JP-A-59-101 244 (TSUCHIYA SEISAKUSHO
K.K.) 11.06.1984

(73) Patentinhaber: Süddeutsche Kühlerfabrik Julius Fr. Behr
GmbH & Co. KG, Mauserstrasse 3,
D-7000 Stuttgart 30(DE)

(72) Erfinder: Kuchelmeister, Reinhold, Dipl.-Ing. (FH), Hoher
Weg 14, D-7035 Waldenbuch(DE)

(74) Vertreter: Wilhelm, Hans-Herbert, Dr.-Ing. et al, Wilhelm
& Dauster Patentanwälte Hospitalstrasse 8,
D-7000 Stuttgart 1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Matrix für einen katalytischen Reaktor zur Abgasreinigung, insbesondere für Brennkraftmaschinen nach dem Oberbegriff des Patentanspruchs 1.

Es ist bekannt DE-A 2 924 592 eine Matrix für einen katalytischen Abgasreaktor dadurch herzustellen, daß ein glattes und ein gewelltes Metallband zu mehreren Schichten aufeinandergewickelt werden, wobei zwischen die aufeinandergewickelten Schichten entweder von einer mit Walzen versehenen Auftragvorrichtung Lotmaterial in Streifenform und auch durchgehend auf das glatte Band oder jeweils auf die äußersten Erhebungen des gewellten Bandes aufgebracht wird, das anschließend in einem Ofen zum Schmelzen gebracht wird. Bekannt ist es auch aus dieser Druckschrift, anstelle von Lotmaterial Lotbänder mit in die einzelnen Windungen einzulegen.

Diese zuletzt genannte Methode weist den Vorteil auf, daß dieses Lotband in verhältnismäßig einfacher Weise mit in die Matrix eingewickelt werden kann und durch die aufeinanderliegenden Schichten festgehalten wird, bis die Matrix im Ofen verlötet wird. Nachteilig ist aber, daß die Matrix durch das Dazwischenwickeln von Lotband, auch wenn dieses nur eine sehr geringe Dicke von Bruchteilen von Milimetern hat, durch das Aufeinanderwickeln von mehreren Schichten ihren Durchmesser vergrößert. Beim Lötvorgang, bei dem das eingewickelte Lot schmilzt, findet jedoch ein Setzen statt, das zu einer unkontrollierten Durchmesserveränderung der Matrix führen kann, die sich anschließend nicht mehr oder nicht mehr in der erforderlichen Weise in einen Mantel pressen läßt.

Man hat deshalb in der Regel darauf verzichtet, eine Verlötung der einzelnen Schichten über die gesamte axiale Länge der Matrix vorzusehen, sondern sich darauf beschränkt, die gewickelte Matrix jeweils mit den Strinseiten in ein Lotbad einzutauchen, so daß die Matrix jeweils nur stirnseitig verlötet war. Es hat sich gezeigt, daß eine solche stirnseitige Verlötung nicht in allen Fällen ausreichend ist.

Es ist auch bekannt, Honigwabenstrukturen durch Stapeln von Wellplatten und glatten Platten zu bilden und jeweils längs den Scheiteln der Wellungen nutenförmige Einprägungen vorzusehen, die zur Aufnahme von Lotmaterial dienen, das bei der notwendigen Erhitzung die gewünschte Festigkeit für die Honigwabenstruktur ergibt. Die Trägerkörper für die Abgaskatalysatoren von Verbrennungskraftmaschinen lassen sich aber wirtschaftlich nicht durch Stapeln herstellen Bei den dort vorgesehenen Wickelverfahren aber eignet sich das Aufbringen von Lotmaterial an den Wellenkämmen nicht (JP-A 57 210 184).

Bekannt ist es auch (EP-A 136 515), bei Trägerkörpern, die aus einem Wellband und einem Glattband gewickelt werden, das Glattband in der Wickelrichtung mit längs verlaufenden Einprägungen zu versehen, die dazu dienen sollen, das Lötmaterial aufzunehmen, Solche längsstrukturierten Glattbänder lassen sich aber nur schwer quer zu ihrer Längsstruktur biegen und lassen sich daher auch nicht in einfacher Weise zu dem gewünschten Trägerkörper wickeln. Das Volumen solcher Längsstrukturen ist auch relativ groß, so daß mehr Lotmaterial aufgenommen wird, als zur Verfestigung des Wickelkörpers notwendig ist.

Der Erfindung liegt daher die Aufgabe zugrunde, eine Matrix der eingangs genannten Art so auszubilden, daß weder während des Wickelvorganges oder des Faltvorganges noch beim anschließenden Lötvorgang eine Durchmesserveränderung befürchtet werden muß.

Zur Lösung dieser Aufgabe werden bei einer Matrix der eingangs genannten Art die herausreichenden Merkmale des Patentanspruchs 1 angesehen. Ferner zwei Verfahren zu deren Herstellung und die Vorrichtung gemäß den Merkmalen der Ansprüche 4, 5 und 6.

Diese Ausgestaltung erlaubt es in einfacher Weise, das Lotmaterial, beispielsweise Lotbänder, in der bekannten Weise bei der Herstellung mit einzuwickeln, wobei jedoch die gewickelten oder gefalteten Bänder unmittelbar aneinander anliegen und nur in den Zwischenbereichen, in denen die Vertiefungen verlaufen, das Lotmaterial vorhanden ist, das anschließend die feste Verbindung der aufeinandersitzenden Schichten gewähleistet. Dabei ist es möglich, die Vertiefungen in Radialebenen anzuordnen, wobei das Lotband oder das Lotmaterial parallel zur Zuführrichtung der zu wickelnden Bänder eingeführt ist. Es ist auch möglich, die Vertiefungen jeweils sprialförmig auf den Mantellinien der gewickelten Schichten verlaufen zu lassen, wobei in diesem Fall eine entsprechende Zuführung von Lotband oder Lotmaterial vorgesehen sein muß. Dies läßt sich aber verhältnismäßig einfach verwirklichen.

Die Vertiefungen können in sehr einfacher Weise beispielsweise dadurch hergestellt werden, daß ein unter einer entsprechenden Zugspannung stehender Lotdraht genügender Festigkeit in die Matrix eingewickelt wird, der sich jeweils an den äußeren Bereichen der Wellungen durch die von seiner Zugspannung bewirkte Radialkraft in das relativ weiche Material der Wellbänder eindrückt, jedenfalls soweit, daß er nicht über die äußersten Bereiche der Wellungen vorsteht. Es ist aber auch möglich, bei der Herstellung der Wellungen des Metallbandes gleich dafür zu sorgen, daß die entsprechenden Vertiefungen in die äußersten Bereiche der Wellungen eingedrückt werden. Das kann in sehr einfacher Weise beispielsweise durch ein Zahnwalzenpaar geschehen, das an seinem Umfang umlaufende Rippen geringer Abmessungen aufweist, die die gewünschten Vertiefungen entweder in Radialebene oder auch in Spiralform eindrücken.

Die Erfindung ist in der Zeichnung anhand von Ausführungsbeispielen dargestellt und wird im folgenden beschrieben. Es zeigen:

Fig. 1 eine schematische Darstellung des kontinuierlichen Wickelvorganges einer neuen Matrix, die anschließend einem Lötofen zugeführt wird,

Fig. 2 die Draufsicht auf die schematische Einrichtung der Fig. 1, wobei jedoch eine Reihe von Teilen der Fig. 1 weggelassen und nur die Führungseinrichtung für Lotdraht oder Lotfolie gezeigt ist,

Fig. 3 die perspektivische und vergrößerte Teildarstellung der in der Einrichtung der Fig. 1 verwendeten Zahnwalzen zur Herstellung des Wellbandes,

Fig. 4 eine perspektivische und schematische Ansicht einer neuen Matrix,

Fig. 5 Teildarstellung des Einpreßvorganges der neuen Matrix in einen Mantel und

Fig. 6 eine Variante der Matrix der Fig. 4, die am äußersten Umfang mit einer Bauchbinde eines Lotbandes zur Verlötung im Mantel versehen ist.

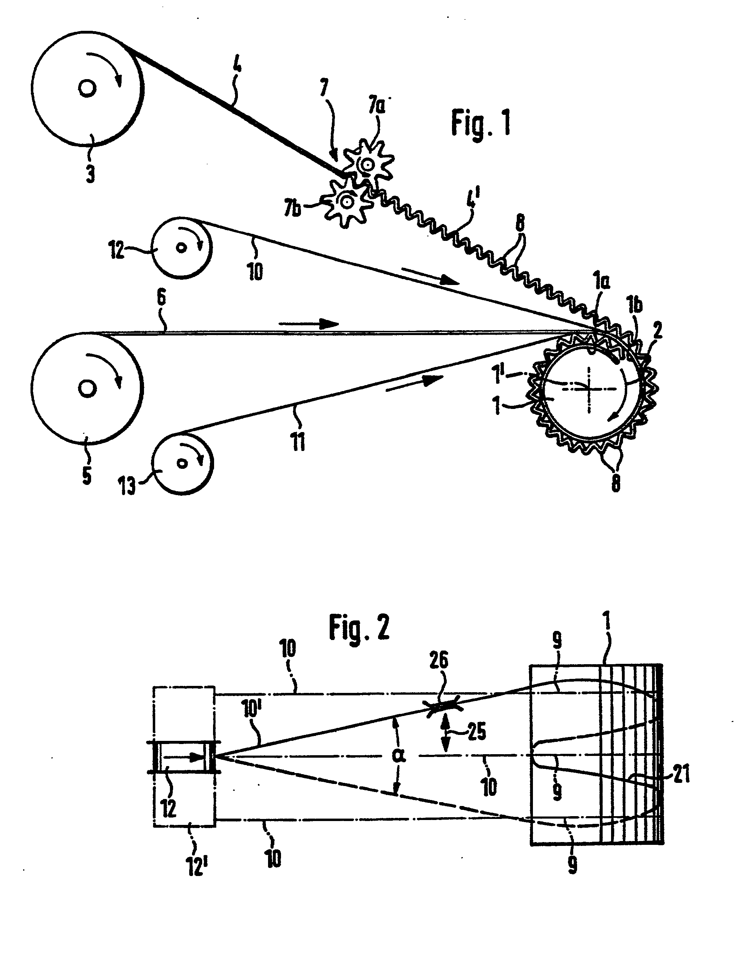

In der Fig. 1 ist schematisch eine Wickelvorrichtung gezeigt, mit deren Hilfe ein glattes Metallband (6) und ein gewelltes Metallband (4') in mehreren Schichten (1a, 1b) zu einer Matrix (1) gewickelt werden können. Dies geschieht dadurch, daß die Wickeleinrichtung die einzelnen Bänder im Sinne des Pfeiles (2) um die Wickelachse (1') dreht. Die von einem Coil (3) bzw. (5) jeweils abgewickelten Metallbänder (4) bzw. (6) sind zunächst beide als glatte Bänder ausgebildet. Das Band (4) durchläuft jedoch ein Zahnwalzenpaar (7), dessen obere Zahnwalze (7a) und untere Zahnwalze (7b) so ineinandergreifen, daß das Band (4) beim Durchlaufen dieses Zahnwalzenpaares (7) die gewünschte gewellte Form (4') erhält. Zwischen die einzelnen Schichten (1a, 1b) der so gewickelten Matrix (1) wird ein Lötdraht (10) bzw. (11) oder eine Lotfolie mit eingewickelt, der jeweils von einer Rolle (12) bzw. (13) kontinuierlich abgewickelt wird. Die einzelnen Schichten des glatten Bandes (6) und des gewellten Bandes (4') stützen sich gegeneinander jeweils an den Bereichen (8) ab, die durch die jeweils am weitesten außenliegenden Wellenkämme des Wellbandes gebildet sind. Beim gezeigten Ausführungsbeispiel verlaufen die Wellen parallel zur Wickelachse (1'). Es findet daher jeweils eine Linienberührung zwischen den Bändern (4') und (6) an Mantellinien der einzelnen Schichten (1a, 1b) statt, die parallel zur Wickelachse (1') verlaufen.

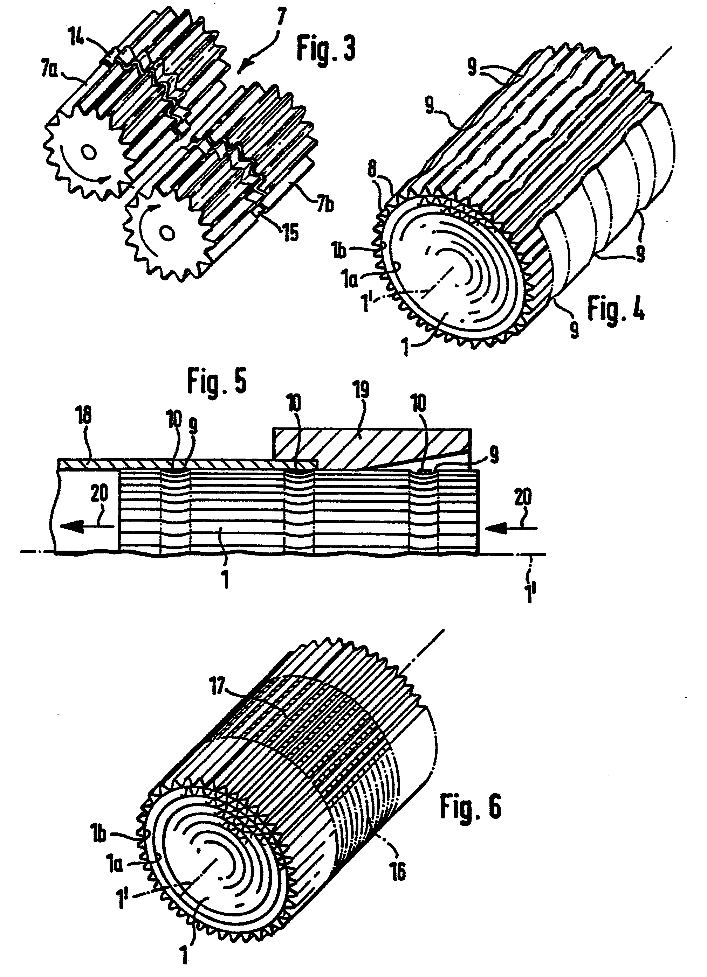

Fig. 2 zeigt, daß die Zuführung des Lotdrahtes (11) - die Zuführung des Lotdrahtes oder der Lotfolie (10) erfolgt analog - jeweils mit Hilfe einer Führungswalze (12) erfolgt, die in Fig. 2 gestrichelt bzw. durchgezogen angedeutet ist. Dabei bestehen zwei Möglichkeiten der Zuführung des Lotdrahtes (10) bzw. (10'). Strichpunktiert ist angedeutet, daß der Lotdraht (10) an drei axial versetzten Stellen der entsprechend breit ausgebildeten Führungswalze (12') abgezogen wird und dann in Radialebenen verläuft, in denen er in noch anhand der Fig. 3 und 4 zu erläuternde Vertiefungen (9) eingelegt wird. Es besteht aber auch die Möglichkeit, Lotdraht (10') oder Lotfolie von einer feststehenden Walze (12) so abzuwickeln, daß der Lotdraht jeweils wechselnd unter einem Winkel ($\alpha$) zwischen die Schichten der Matrix (1) eingewickelt wird. Dies wird durch eine im Sinn der Pfeile (25) hin- und hergehende Füh rungseinrichtung (26) erreicht, die dafür sorgt, daß der Lotdraht (10') oder die Lotfolie beispielsweise spiralförmig zwischen die Schichten der Matrix (1) längs der Linie (21) eingewickelt wird, die, wie noch erläutert werden wird, ebenfalls als eine Vertiefung in den äußersten Bereichen (8) jeweils des Wellban-des ausgebildet ist.

Sowohl die in den Radialebenen verlaufenden Vertiefungen (9) jeweils in den Bereichen (8) des Wellbandes (4') als auch die Vertiefungen (21) können in sehr einfacher Weise dadurch hergestellt werden, daß ein Lotdraht (10, 10') entsprechender Zugfestigkeit verwendet wird, der, von der Spule (12) bzw. (12') kommend unter einer solchen Zugspannung zwischen die Schichten (1a, 1b) der Matrix (1) eingeführt wird, daß er aufgrund der auf die Wellungen des Metallbandes (4') in den äußersten Bereichen (8) ausgeübten Radialkräfte sich selbst in diese Wellungen eindrückt, jedenfalls so weit, daß er nicht über die radial äußerste Begrenzung dieser Bereiche (8) der Wellungen vorsteht. Diese Methode kann angewendet werden für das Einführen von Lotdraht in Vertiefungen (9), die in Radialebenen verlaufen. Sie läßt sich auch anwenden, wenn der Lotdraht von der Führungseinrichtung (26) über die axiale Länge wechselnd zwischen die Schichten (1a, 1b) mit eingewickelt wird. In beiden Fällen kann die Zugspannung genügen, um den Lotdraht sich selbst die Vertiefungen (9) bzw. (21) bilden zu lassen. Die so aufgewickelte Matrix liegt daher mit den Bändern (4') und (6) unmittelbar aneinander an. Sie ändert weder beim Wickelvorgang ihren Durchmesser noch anschließend beim Lötvorgang im Lötofen, wo der Lötdraht schmilzt und sich ausgehend von den selbst gebildeten Vertiefungen in die daran angrenzenden Bereiche verteilt. Die neue Matrix kann daher auf Teilbereichen ihrer gesamten axialen Länge in allen aneinandergrenzenden Schichten miteinander verlötet werden.

Bei Verwendung einer dünnen Lotfolie in der Form eines Lotbandes ist die eben geschilderte Methode nicht so einfach zu erreichen. In diesem Fall kann gemäß den Fig. 3 bis 5 vorgesehen werden, daß die Zahnwalzen (7a, 7b) mit korrespondierenden Erhebungen in Form von umlaufenden Ripppen (14) oder umlaufenden Vertiefungen (15) versehen werden, die in Fig. 3 in ihren Abmessungen übetrieben gezeichnet sind. Wenn bedacht wird, daß Lotfolien nur Bruchteile von Millimetern in ihrer Dicke haben, so wird klar, daß die Höhe der Rippen (14) bzw. die Tiefe der Nuten (15) sehr gering sein kann. Beim Ausführungsbeispiel der Fig. 3 werden durch die korrespondierenden und ineinandergreifenden Rippen (14) und Nuten (15) die Vertiefungen (9) hergestellt, die in Radialebenen verlaufen. Möglich wäre es aber auch, die Nuten (15) und Rippen (14) spiralförmig am Umfang der Zahnwalzen (7a, 7b) verlaufen zu lassen, so daß auch dann der spiralförmige Verlauf der Vertiefungen (21) erzielbar ist. In die aus Fig. 4 ersichtlichen Vertiefungen (9) kann dann in der in der Fig. 1 und 2 angedeuteten Weise eine Lotfolie eingelegt werden, die ebenfalls zwar für eine einwandfreie Verlötung der einzelnen Schichten in Bereichen sorgt, die über die gesamte axiale Länge der Matrix verteilt sind, die aber so angeordnet ist, daß sie weder beim Wickelvorgang noch beim späteren Lötvorgang zu einer Durchmesserveränderung führen kann.

Diese Ausbildung der Matrix weist den Vorteil auf, daß die so hergestellte Matrix auch an ihrem äußeren Umfang in Radialebenen umlaufende Streifen von Lotmaterial (10) aufweist, die nach dem Einpressen der Matrix (1) in Richtung der Pfeile (20) in einen Mantel (18) für eine einwandfreie Verbindung der Matrix mit dem Mantel sorgt. Der Einpreßvorgang wird - in bekannter Weise - durch einen konischen Einführungsring (19) erleichtert.

Die Fig. 6 zeigt eine gewisse Abwandlung insofern, als hier zusätzlich am äußersten Umfang ein Lotband (17) in der Art einer Bauchbinde auf die Matrix (1) aufgewickelt wurde, die aber ebenfalls in einer umlaufenden Vertiefung eingelegt ist. Ebenso wie das umlaufende Lotmaterial (10) sorgt auch dieses breite Lotband (17) nach dem Einpressen der Matrix (1) in einen Mantel (18) für eine innige Verbindung mit dem Mantel, wenn die so vorbereitete Matrix in einem Lötofen erhitzt und anschließend wieder abgekühlt wird.

## Patentansprüche

1. Matrix für einen katalytischen Reaktor zur Abgasreinigung, insbesondere für Brennkraftmaschinen, bestehend aus einem gewellten oder einem glatten und einem gewellten Metallband, die zu mehreren aneinandergrenzenden Schichten gewickelt oder gefaltet und untereinander mindestens teilweise verlötet sind, wobei die an die benachbarten Schichten (1a, 1b) angrenzenden Scheitelbereiche (8) des gewellten Bandes (4') im wesentlichen parallel zur Wickelachse (1') oder zu den Faltkanten verlaufen, dadurch gekennzeichnet, daß radiale Vertiefungen (9, 21) geringer Abmessungen an den Scheitelbereichen (8) vorgesehen sind, in denen das zur Verlötung dienende Material (10, 10') aufgenommen ist, die in senkrecht oder schräg zu den Scheitelbereichen (8) verlaufenden Ebenen angeordnet sind.

2. Matrix nach Anspruch 1, dadurch gekennzeichnet, daß die Vertiefungen spiralförmig auf den Mantelflächen jeder Schicht (1a, 1b) verlaufen.

3. Matrix nach Anspruch 1 oder 2, dadurch gekennzeichnet, daß der in Wickelrichtung (2) oder Faltrichtung gesehene Querschnitt der Vertiefungen (9, 21) an das verwendete Lotmaterial, insbesondere an die Abmessungen eines miteingelegten Lotbandes angepaßt ist.

4. Verfahren zur Herstellung einer Matrix nach einem der Ansprüche 1 bis 3, bei dem die Matrix durch Wickeln und durch Einwickeln von kontinuierlich zugeführtem Lötmaterial hergestellt wird, das anschließend in einem Ofen zum Fließen gebracht wird, dadurch gekennzeichnet, daß als Lötmaterial ein Lötdraht (10, 11) vorgesehen wird, der unter einer solchen Zugspannungen während des Wickelns zwischen die zu verlötenden Schichten mit eingewickelt wird, daß er aufgrund der von der Zugspannung bewirkten Radialkräfte die Vertiefungen (9) unmittelbar in das gewellte Band (4') eindrückt.

5. Verfahren zur Herstellung einer Matrix nach einem der Ansprüche 1 bis 3, dadurch gekennzeichnet, daß das gewellte Band (4') vor dem Wickeln mit den Vertiefungen (9, 21) versehen wird und daß in diese Vertiefung ein Lötdraht oder ein Lotfolienstreifen während des Wickelns eingelegt wird.

6. Vorrichtung zur kontinuierlichen Herstellung einer gewickelten Matrix nach einem der Ansprüche 1 bis 3 und zur Durchführung des Verfahrens nach Anspruch 5, bei dem ein Zahnwalzenpaar zur Herstellung des gewellten Metallbandes der Wickeleinrichtung vorgeschaltet ist, dadurch gekennzeichnet, daß das Zahnwalzenpaar mit rippenartigen Vorsprüngen (14) bzw. korrespondierenden Vertiefungen (15) an seinem Umfang versehen ist und daß eine Führungseinrichtung (26) für den Lotdraht oder die Lotfolie (10, 10', 11) vorgesehen ist, den Lotdraht oder die Lotfolie analog dem vorgesehenen Verlauf der Vorsprünge und Vertiefungen (14, 15) der Wickeleinrichtung (1) zuführt.

## Revendications

1. Matrice pour un réacteur catalyteique utilisé pour l'épuration des gaz d'échappement, notamment pour des moteurs à combustion interne, constitué par une bande métallique ondulée ou plate et par une bande métallique ondulée, qui sont enroulées ou repliées de manière à former plusieurs couches contiguës et sont réunies au moins partiellement entre elles par soudage, les parties de sommet (8) de la bande ondulée (4'), qui sont contiguës aux couches voisines (1a, 1b), étant sensiblement parallèles à l'axe d'enroulement (1') ou aux arêtes de pliage, caractérisé en ce que dans les parties de sommet (89 il est prévu des renfoncements radiaux (9, 21) possédant de faibles dimensions, dans lesquels est logé le matériau (10, 10') utilisé pour le soudage et qui sont diposés dans des plans perpendiculaires ou obliques par rapport aux parties de sommet (8).

2. Matrice selon la revendication 1, caractérisée en ce que les refoncements s'étendent, avec une forme hélicoïdale, sur les surfaces enveloppes de chaque couche (1a, 1b).

3. Matrice selon la revendication 1 ou 2, caratérisée en ce que la section transversale des renfoncements (9, 21), vue dans la direction d'enroulement (2) ou dans la direction de pliage, est adaptée à la soudure utilisée, notamment aux dimensions d'une bande de soudure intercalée.

4. Procédé pour fabriquer une matrice selon l'une des revendications 1 à 3, selon lequel on fabrique la matrice par enroulement tout en intercalant un matériau de soudure amené de façon continue, que l'on fait ensuite fluer dans un four, caractérisé en ce qu'on utilise comme soudure un fil de soudure (10, 11), que l'on enroule simultanément entre les couches à souder pendant l'enroulement, moyennant l'application d'une contrainte de traction telle que le fil de soudure forme par impression les renfoncements (9) directement dans la bande ondulée (4'), sous l'effet des forces radiales provoquées par la contrainte de traction.

5. Procédé pour fabriquer une matrice suivant l'une des revendications 1 à 3, caractérisé par le fait qu'on aménage les renfoncements (9, 21) dans la bande ondulée (4'), avant l'enroulement, et qu'on insère, dans ces renfoncements, un fil de soudure ou une bande formée d'une feuille de soudure pendant l'enroulement.

6. Dispositif pour fabriquer en continu une matrice enroulée selon l'une des revendications 1 à 3 et pour la mise en euvre du procédé selon la revendication 5, et dans lequel un couple de cylindres dentés servant à fabriquer la bande métallique ondulée est installé en amont du dispositif d'enroulement, caractérisé en ce que les cylindres dentés du couple comportent respectivement des parties saillantes en forme de nervures (14) ou des renfoncements correspondants (15) sur leur périphérie et qu'il est prévu un dispositif de guidage (26) pour le fil de soudure ou la feuille de soudure (10, 10', 11), qui délivre le fil de soudure ou la feuille de soudure conformément à la configuration prévue des parties saillantes et des renfoncements (14, 15) du dispositif d'enroulement (1).

**Claims**

1. A matrix for a catalytic reactor for exhaust gas cleaning, in particular for internal combustion engines, comprising a corrugated or a smooth and a corrugated metal strip which are wound or folded to provide a plurality of mutually adjoining layers and which are at least partially soldered together, wherein the apex regions (8) of the corrugated strip (4'), which adjoin the adjacent layers (1a, 1b), extend substantially parallel to the winding axis (1') or to the fold edges, characterised in that radial depressions (9, 21) of small dimensions are provided at the apex regions (8), in which the material (10, 10') serving for the soldering operation is accommodated, and which are arranged in planes extending normal or inclinedly with respect to the apex regions (8).

2. A matrix according to claim 1 characterised in that the depressions extend in a spiral configuration on the peripheral surfaces of each layer (1a, 1b).

3. A matrix according to claim 1 or claim 2 characterised in that the cross-section of the depressions (9, 21), as viewed in the winding direction (2) or folding direction, is matched to the solder material used, in particular to the dimensions of a solder strip which is also laid therein.

4. A process for the production of a matrix according to one of claims 1 to 3 wherein the matrix is produced by winding and by also winding in continuously supplied solder material which is then caused to flow in a furnace characterised in that the solder material is a solder wire (10, 11) which is wound in between the layers to be soldered during the winding operation under such a tension that it directly impresses the depressions (9) into the corrugated strip (4') by virue of the radial forces produced by the tension.

5. A process for the production of a matrix according to one of claims 1 to 3 characterised in that the corrugated strip (4') is provided with the depressions (9, 21) prior to the winding operation and that a solder wire or a solder foil strip is laid into said depression during the winding operation.

6. Apparatus for the continuous production of a wound matrix according to one of claims 1 to 3 and for carrying out the process according to claim 5 wherein a pair of toothed rollers is disposed upstream of the winding device, for the production of the corrugated metal strip, characterised in that the pair of toothed rollers is provided at the periphery thereof with rib-like projections (14) and corresponding depressions (15) respectively, and that there is provided a guide means (26) for the solder wire or the solder foil (10, 10', 11), which feeds the solder wire or the solder foil similarly to the configuration provided in respect of the projections and depressions (14, 15) of the winding device (1).

Fig. 1

Fig. 2

Fig. 3

Fig. 4

Fig. 5

Fig. 6